# EUROPEAN PATENT APPLICATION

(11) **EP 2 927 550 A1**
(43) Date of publication of application: **07.10.2015**
(21) Application number: 13860537.3
(22) Date of filing: 08.05.2013
(51) Int. Cl.: F16K 31/60, F16K 5/06

(54) **IMPROVED STRUCTURE OF A BALL VALVE AND THE OPERATING KEY THEREOF**

(30) Priority: 03.12.2012 ES 201231879
(71) Applicant: Valvulas Arco, S.L., 46134 Foios (Valencia) (ES)
(72) Inventor: FERRER BELTRAN, José María, E-46134 Foios (Valencia) (ES)
(74) Representative: Carpintero Lopez, Francisco
(86) International application number: PCT/ES2013/070290
(87) International publication number: WO 2014/087033

(57) **Abstract**

The invention relates to an improved structure of a ball valve and the operating key thereof, consisting of a surrounding frame (2) of the valve that communicates the inlet and the outlet of a pipeline, containing a closing body (4) having a preferably spherical or ball-type shape provided with a pair of openings aligned with each other, that can rotate about itself, wherein said closing body is a preferably spherical body provided with two aligned openings, perpendicularly to which there are two rectangular seats (6) wherein two axles (5) fit, said axles transmitting the rotational forces of the closing body (4) and being secured to the key element or handle (1) of the valve. The valve is advantageous in that the key or handle (1) transmits the rotational force to the closing body (4) at two points, reducing the mechanical stresses compared to conventional ball valves.

## Description

The present invention, i.e., improved structure of a ball valve and the operating key thereof, consists of a novel valve and key structure, the main novelty of which lies in the structure for rotating the spherical closing surface and the associated key, having as a main advantage that it constitutes a seat between a key and a closing body having greater resistance and durability compared to conventional structures in such valves.

For this reason, the object of the present invention will be of interest for the sector of the industry which manufactures and supplies valves and particularly the so-called ball valves.

### Background

Valves referred to as ball valves are structures that have been known for decades. It will suffice to mention, by way of example, Spanish Utility Model U0214254 with an application date of July 28, 1975 belonging to AUSTINOX S.A. entitled "Ball Valve" which already describes a typical structure of such valves, consisting of a surrounding frame, an intermediate sleeve and an inner spherical closing body with two diametrically opposing mouths.

In fact, a ball valve is a shut-off valve mechanism used for regulating the flow of a fluid inside a channel and it is characterized in that the regulating mechanism located in the inside is in the form a perforated ball. This closing body usually has two aligned holes such that the fluid can flow between both openings. The closing body is in turn enclosed in a surrounding frame to which both ends of the pipeline or pipe are connected.

The key is usually open by rotating said spherical closing body, operated by a key or handle, such that when the perforations of the closing body are aligned with the inlet and the outlet of the valve, the fluid flows through it, whereas by rotating the closing body a quarter turn, the openings are located perpendicular to the direction of the inlet and the outlet, such that passage of the fluid is blocked and the valve is closed.

Likewise, since it is a quarter-turn valve the position of the actuating key or handle is used for indicating the state of the valve (open or closed).

Among the main advantages of these valves, besides the fact that they are quarter-turn valves that can therefore be operated quickly, it must be pointed out that the perforated ball allows direct circulation in the open position with a considerably lower pressure loss than those of globe valves.

One of the possible drawbacks is that given that they can be closed quickly, a certain water hammer effect can occur causing the seat mechanisms of the closing body to suffer certain mechanical fatigue.

These valves can be two- or three-way valves by simply adding a third opening in the closing body and obviously adapting the shape of the surrounding frame to the third pipeline.

Such valves are widely used because they are, among other reasons, very easy to make. However, one of the weaknesses of a conventional ball valve structure, considering installations in which maintenance tasks are not usually carried out, is that the closing body is usually operated at a single point, where it is attached to the end of an operating key or handle, whereas at the diametrically opposing end, it is housed in a bearing formed in the surrounding frame or body of the valve.

This causes the force/stress, increased by the resistance of the elements that are usually gathered in the inner structures thereof as they are dragged by the fluid, particularly when said fluid is water, and experienced by the point attaching the key or handle and the closing body when closing and opening the valve to be high and it often ends up experiencing mechanical damage. Likewise, the force on the lever-shaped key or handle is also high so it is necessary to design these elements with high resistance, increasing the production cost and, despite all this, they often constitute the valve element that breaks or fails over time.

There are various key or handle designs for ball valves, among which the design of US design registration 412,966 of Newport News Shipbuilding and Drydock Company entitled "Valve Handle" dated December 4, 1998 or US design registration D459,444 of Shin Tai Spurt Water of the Garden Tools Co. Ltd entitled "Handle of a Ball Valve" dated May 3, 2001, can be mentioned by way of example.

Despite adopting different shapes for improving the mentioned fatigue problems, all the foregoing designs are devised for interacting at a single point on the spherical closing body and for transmitting rotational force to that point.

However, the present invention constitutes a structure that revolutionizes the shape of the closing body and of the key or handle, such that it interacts at two diametrically opposing points of the closing body, simultaneously transmitting rotational force to both points and reducing forces and mechanical stresses/strains both in the closing body and in the operating key or handle of the valve.

### Description

The present improved structure of a ball valve and the operating key thereof which is described below consists fundamentally of a surrounding frame of the valve that communicates the inlet and the outlet of a pipeline, through which a fluid circulates, which contains a preferably spherical or ball-type shape closing body provided with a pair of openings aligned with each other, that can rotate about itself, aligning respective openings with the inlet and outlet openings of the valve in the open position, or placing these perpendicular to the channel for the passage of fluid through the valve in the closed position. The mentioned spherical closing body consists of a preferably spherical body provided with two aligned openings, perpendicularly to which there are two rectangular seats where two shafts fit, said shafts transmitting the rotational forces of the closing body and running along the inside of two tubular projections transverse and perpendicular to the surrounding surface of the valve, the ends thereof where they are arranged integral with the key or handle element of the valve protruding outwardly. The spherical closing body therefore rotates due to the action of the two points attaching the closing body and the operating key or handle of the valve, the force being transmitted by respective shafts. The rotation of the spherical closing body is therefore transmitted by the mechanical rotational force of the key or handle through the two points attaching the closing body and the key or handle of the structure.

On the other hand, said shafts transmitting the rotational forces of the closing body and integral with the key or handle element of the valve are provided with pressure-tight joints for leak-tight attachment between the closing body and the surrounding frame or body of the valve.

Likewise, the outer surface of the mentioned tubular projecting bodies having, running along the inside thereof, the mentioned shafts through which movement is transmitted between the key and closing body, is provided with respective notches acting like a stop on the free ends of the key or handle given that these end up forming fingers that engage the preceding notches in the path of movement of the key. The movement of the key is therefore limited to a quarter turn, preventing it from being able to be forced, entailing a device with added protection which prolongs the service life of the key.

### Preferred Embodiment of the Invention

A detailed description of the improved structure of a ball valve and the operating key thereof, object of the present invention, will be provided below in reference to the attached drawings depicting, by way of non-limiting example, a preferred embodiment that is susceptible of all those variations that do not involve any fundamental change to the essential features of said improvements.

Said drawings illustrate:

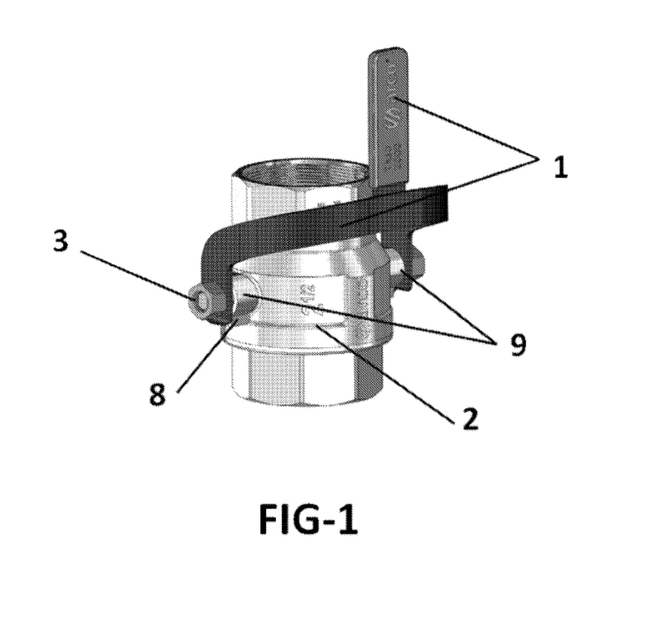

Figure 1 shows a perspective view of the improved structure of a ball valve and the operating key thereof with the key in the open position.

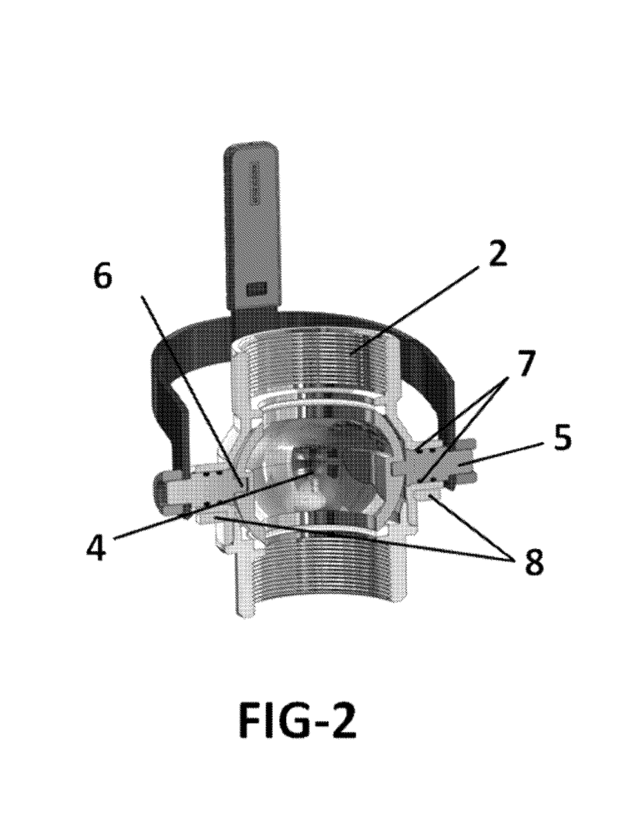

Figure 2 shows a perspective section view of the improved structure of a ball valve and the operating key thereof with the key in the open position.

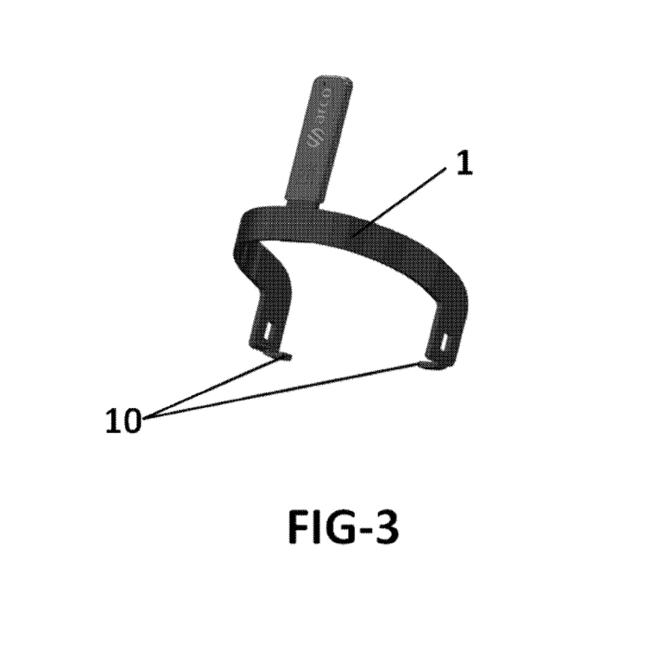

Figure 3 shows a perspective view of the key or handle of the improved structure of a ball valve and the operating key thereof.

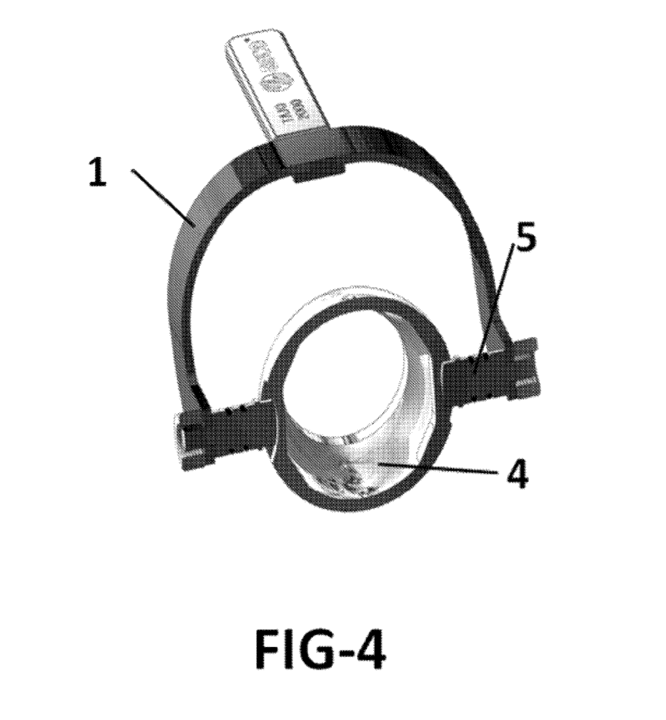

Figure 4 shows a perspective section view of the improved structure of a ball valve and the operating key thereof without the surrounding frame or body of the valve for illustrating the inner elements with the key in the closed position.

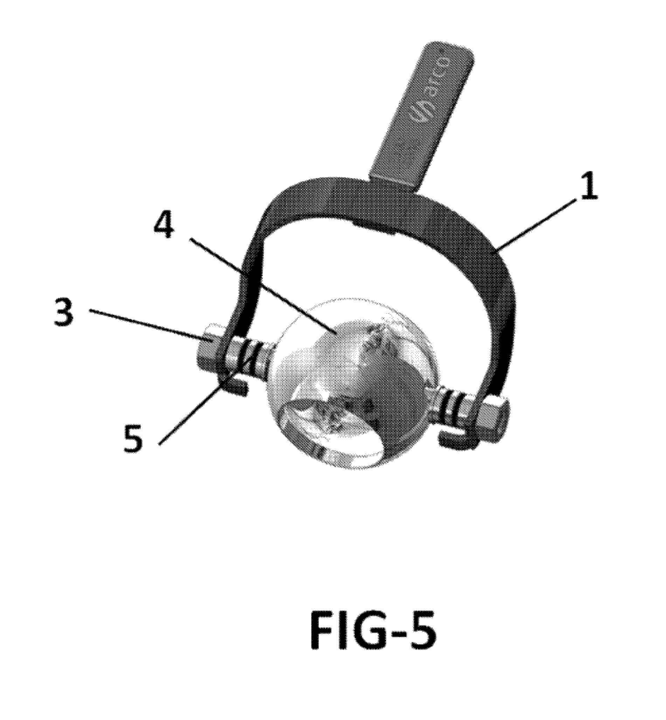

Figure 5 shows a perspective view of the improved structure of a ball valve and the operating key thereof without the surrounding frame or body of the valve for illustrating the inner elements with the key in the closed position.

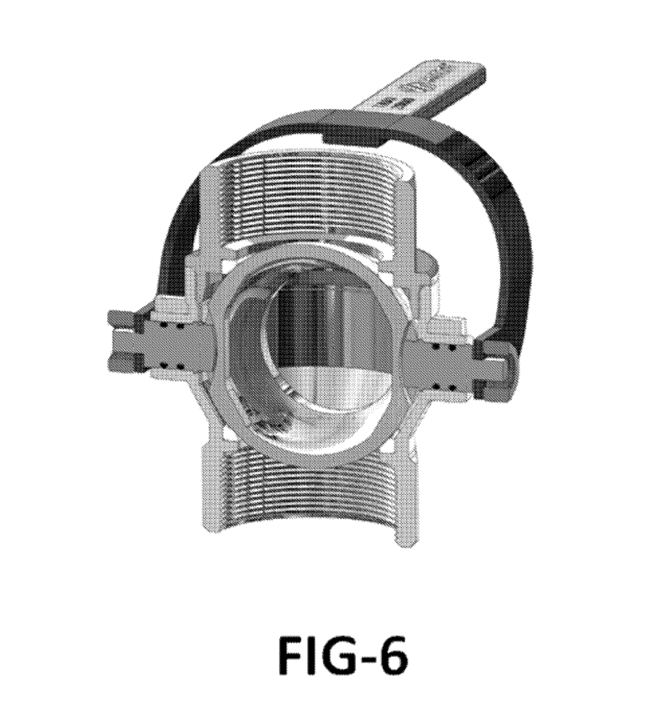

Figure 6 shows a perspective section view of the improved structure of a ball valve and the operating key thereof with the key in the closed position.

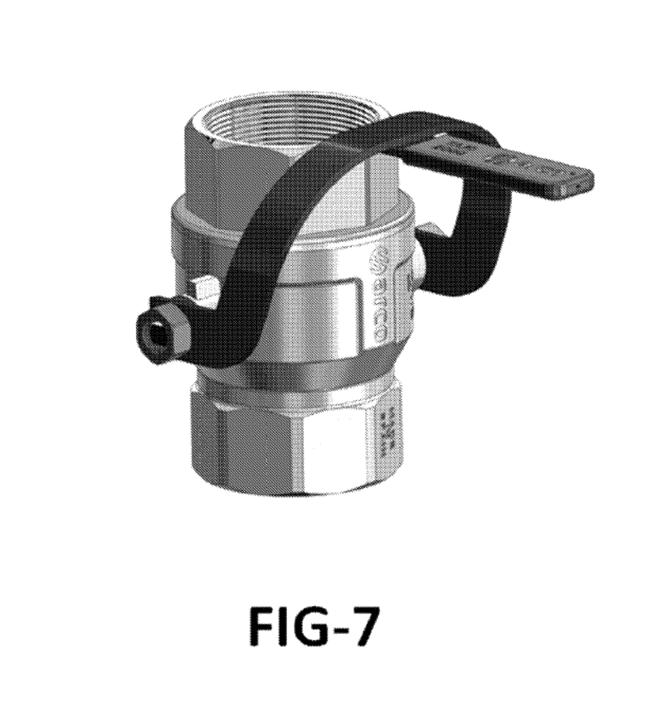

Figure 7 shows a perspective view of the improved structure of a ball valve and the operating key thereof with the key in the closed position.

According to the depicted example of implementation, the improved structure of a ball valve and the operating key thereof which is illustrated in this preferred embodiment consists fundamentally of a surrounding frame (2) of the valve that communicates the inlet and the outlet of a pipeline, through which a fluid circulates, which contains a preferably spherical or ball-type shaped closing body (4) provided with a pair of openings aligned with each other, that can rotate about itself, aligning respective openings with the inlet and outlet openings of the valve in the open position, or placing these perpendicular to the channel for the passage of fluid through the valve in the closed position. The mentioned preferably spherical closing body (4) consists of a body having said shape provided with two aligned openings, perpendicularly to which there are two rectangular seats (6) where two shafts (5) fit, said shafts transmitting the rotational forces of the closing body (4) and running along the inside of two tubular projections (9) transverse and perpendicular to the surrounding surface of the valve, the ends thereof where they are arranged integral with the key or handle element (1) of the valve protruding outwardly. The spherical closing body (4) therefore rotates due to the action of the two points (3) attaching the closing body (4) and the operating key or handle (1) of the valve, the force being transmitted by the respective shafts (5). The rotation of the spherical closing body (4) is therefore transmitted by the mechanical rotational force of the key or handle (1) through the two points (3) attaching the closing body (4) and the key or handle (1) of the structure.

On the other hand, said shafts (5) transmitting the rotational forces of the closing body (4) and integral with the key or handle element (1) of the valve, are provided with pressure-tight joints (7) for leak-tight attachment between the closing body and the surrounding frame or body (2) of the valve

Likewise, the shape of the key or handle (1) of the valve is formed by a symmetrical surrounding structure having, protruding from the central part thereof, an actuating grip for manual operation the purpose of which consists of facilitating the operation of the valve and indicating the closed/open positions of the closing body.

On the other hand, the outer surface of the mentioned tubular projecting bodies (9) having, running along the inside thereof, the mentioned shafts (5) through which movement is transmitted between key (1) and closing body (4), is provided with respective notches (8) acting like a stop on the free ends of the key or handle (1) given that these end up forming fingers (10) which engage the preceding notches (8) in the path of movement of the key. In this manner and since the movement of the key (1) is limited to a quarter turn, the forces for operating on the notch and stop (8 and 10) are distributed in each of the tubular projecting bodies at 50% preventing the bodies from being able to be forced, entailing a device with added protection which prolongs the service life of the key.

Finally, the shape, materials and dimensions and generally all accessory and secondary elements may vary, provided that the essential features of the improvements that have been described are not changed or modified.

## Claims

1. Improved structure of a ball valve and the operating key thereof, consisting of a surrounding frame (2) of the valve that communicates the inlet and the outlet of a pipeline, containing a preferably spherical or ball-type shaped closing body (4) provided with a pair of openings aligned with each other, that can rotate about itself, being **characterized in that** the mentioned closing body (4) consists of a preferably spherical body provided with two aligned openings, perpendicularly to which there are two rectangular seats (6) in which two shafts (5) fit, said shafts transmitting the rotational forces of the closing body (4) and running along the inside of two tubular projections (9) transverse and perpendicular to the surrounding surface of the valve, the ends thereof where they are arranged integral with the key or handle element (1) of the valve protruding outwardly.

2. Improved structure of a ball valve and the operating key thereof according to claim 1, **characterized in that** the shape of the key or handle (1) of the valve is formed by a symmetrical surrounding structure having, protruding from the central part thereof, an actuating grip for manual operation of the valve and for indicating the closed/open positions of the closing body.

3. Improved structure of a ball valve and the operating key thereof according to any of the preceding claims, **characterized in that** the outer surface of the mentioned tubular projecting bodies (9) having, running along the inside thereof, shafts (5) for transmitting the movement between key and closing body (4), is provided with a notch (8) in the form of a stop while at the same time the ends of the key or handle (1) end up forming respective fingers (10) that can engage the preceding notches (8) in their path of movement; in this manner and since the movement of the key (1) is limited to a quarter turn, the forces for operating on the notch and stop (8 and 10) are distributed in each of the tubular projecting bodies at 50%, preventing the bodies from being able to be forced, entailing a device with added protection which prolongs the service life of the key.
